# EUROPÄISCHE PATENTSCHRIFT

(11) **EP 1 044 746 B1**
(45) Veröffentlichungstag und Bekanntmachung des Hinweises auf die Patenterteilung: **23.03.2005**
(21) Anmeldenummer: 00107925.0
(22) Anmeldetag: 14.04.2000
(51) Int. Cl.: B23B 27/16, B23B 51/04

(54) **Befestigungssystem für einen Schneidkörper an einem Werkzeug**
Mounting system for mounting a cutting element on a tool
Système de montage pour le montage d'un élément de coupe sur un outil

(30) Priorität: 14.04.1999 DE 19916764
(43) Veröffentlichungstag der Anmeldung: 18.10.2000
(73) Patentinhaber: Müller, Alfred, D-73770 Denkendorf (DE)
(72) Erfinder: Müller, Alfred, D-73770 Denkendorf (DE)
(74) Vertreter: Fürst, Siegfried

(56) Entgegenhaltungen:
- EP-A- 0 388 783
- EP-A- 0 552 774
- FR-A- 2 615 769
- US-A- 4 318 647

## Beschreibung

Die Erfindung betrifft ein multifunktionales Befestigungssystem für einen Schneidkörper, insbesondere für eine Wechsel-Schneidplatte, an einem mindestens einen Schneidkörper aufnehmenden Werkzeug, z. B. einem Fräser, Bohrstange, Fräs- bzw. Messerkopf o. dgl. Werkzeug, das zur spanabhebenden Formgebung einsetzbar ist, mit Mitteln zur verschieb- und arretierbaren Halterung von mindestens einem Schneidkörper, welcher in mindestens einem Teilbereich des Werkzeuges angeordnet ist.

Aus der Praxis sind bereits eine Vielzahl von Befestigungselementen für Schneidkörper an Werkzeugen bekannt. Dabei gewinnen Befestigungselemente, die eine wahlweise radiale und/oder axiale Einstellung der Lage der Schneide des Schneidkörpers zu einem Bezugspunkt gestatten, insbesondere in Bezug auf die Körperachse des Werkzeuges, immer mehr an Bedeutung, um die insbesondere an planen Flächen auftretenden Probleme in Bezug auf die Maßhaltigkeit und Oberflächengüte zu verbessern.

So ist z. B. aus der DE 22 35 782 C2 ein Bohrkopf und aus der DE 29 06 840 C2 ein Aufbohrwerkzeug bekannt, bei denen in jeweils spezieller Ausbildung für die Befestigung eines Schneidkörpers ein Tragelement vorgesehen ist, welches zudem mittels Stell- und Arretiermittel in seiner radialen Ortslage veränder- und befestigbar ist. Die Arretiermittel sind dabei in der Regel in unmittelbarer Ortslage zum Schneidkörper im besagten Tragelement und im Körper des Werkzeuges vorgesehen. Dagegen sind die Stellmittel in den angrenzenden Bereichen des Werkzeuges angeordnet. Die insgesamt im Werkzeug notwendigen Ausnehmungen, wie Löcher bzw. Gewindebohrungen, sind aufgrund des benutzten Konstruktionsprinzips nur durch mehrseitige bzw. mehrmalige Bearbeitung herstellbar. Zudem sind diese Lösungen aufwendig in der Handhabung, so ist z.B. bei einem Zerspanungswerkzeug mit zumindest einer auswechselbaren Schneidplatte nach dem DE-U 83 21 950.1 ein erhöhter Aufwand für Einstellarbeiten notwendig, indem dort zwei bzw. drei Klemm- bzw. Stützschrauben zu betätigen sind. Weiterhin nachteilig ist, dass für die Einstellung der erforderlichen Lage der Schneiden der jeweiligen Schneidplättchen ebenfalls ein hoher Zeitaufwand erforderlich ist und dass durch die Abstützung der dortigen Schneidplättchenhalter über drei Stützpunkte ungünstige Verhältnisse für die Schneidkraftaufnahme vorliegen.
Darüber hinaus ist aus der EP 0 552 774 B1 ein Stufensenker mit am Umfang der einzelnen Stufen von dessen Werkzeug in einem Schneidplattenhalter gehaltenen Schneidplatten bekannt, bei dem in spezieller Ausbildung jede der Schneidplatten auf einer schlittenartigen, radial verschiebbar geführten und mit einem Führungsteil versehenen Halterung aufgesetzt ist und wobei jede Schneid-platte mit einer durch ein vorzugsweise mittig angeordnetes Gewindeloch hindurchgreifenden Spannschraube gehalten wird. Außerdem ist die schlittenartige Halterung in dem axial verstell- und arretierbaren Schneidplattenhalter angeordnet und es sind jeweils auf die Halterung einwirkende Verstellmittel im besagten Werkzeug vorgesehen. Diese letztgenannte technische Lösung, bei der ein Stufensenker eine Ausrichtung der Schneidplatten in radialer und axialer Richtung durch eine Verstellbarkeit gestattet, bringt zwar wesentliche Verbesserungen bzgl. der präzisen Einstellmöglichkeit der Schneidplatten und gestattet eine sehr genaue Bearbeitung aller Flächen von Bohrungen, insbesondere des Bohrungsgrundes oder von Stufenbohrungen hinsichtlich der Maßhaltigkeit und der Oberflächengüte. Jedoch tritt auch hier der Nachteil auf, dass die Herstellung des Werkzeuges sehr zeitaufwendig ist und eine Vielzahl von Einzelteilen benötigt werden.

Ausgehend von diesem Stand der Technik liegt der Erfindung die Aufgabe zugrunde, ein Befestigungssystem für einen Schneidkörper an einem Werkzeug zu schaffen, das vor allem in seinem konstruktiven Aufbau einfach sowie mit geringem technisch ökonomischen Aufwand herstellbar ist und zudem eine präzise Einstellung des Schneidkörpers und somit der Maßhaltigkeit und der Oberflächengüte von mit selbigem gefertigten Flächen garantiert.

Zur Lösung dieser Aufgabe wird ein Befestigungssystem mit den Merkmalen des Patentanspruches 1 vorgeschlagen.

Durch diese Ausbildung des neuen Befestigungssystems für einen Schneidkörper, das vorzugsweise für Wechsel-Schneidplatten an einem Werkzeug, beispielsweise einem Bohrwerkzeug vorgesehen ist, insbesondere mittels des neuen, als kombiniertes Klemm- und Stellelement ausgebildeten Halterungselementes, wird neben einer exakten radialen und axialen Einstellung der Lage der Schneide des Schneidkörpers auch eine sehr präzise Bearbeitung aller Flächen von Bohrungen hinsichtlich der Maßhaltigkeit sowie der Oberflächengüte ermöglicht.

Vorzugsweise wird eine Verringerung der Anzahl der Bauteile sowie eine kostengünstigere Fertigung der Aussparungen, Bohrungen u. dgl. im Kopfteil des Werkzeuges in erfindungsgemäßer Weise durch das neue, speziell gestaltete Halterungselement, das als kombiniertes Klemm- und Stellelement ausgebildet ist, erreicht, indem das Halterungselement einen Grundkörper aufweist, von dem jeweils ein stegartig ausgebildetes erstes Führungsteil und zweites Führungsteil im wesentlichen flügelartig abstehen, wobei das erste Führungsteil eine stirnseitig gelegene Schulter besitzt, die gegenüber der Stirnfläche des Grundkörpers nach hinten versetzt ist und eine von der Fußkante der Schulter ausgehende, bis zur Stirnseite des Grundkörpers reichende Freifläche vorgesehen ist, die von einer in der Symmetrieebene des Grundkörpers liegenden Gewindebohrung durchsetzt ist und wobei im zweiten Führungsteil eine von dessen Stirnfläche ausgehende durchgehende Gewindebohrung angeordnet ist.

Eine bevorzugte Ausführungsform wird darin gesehen, dass die erste Ausnehmung eine Auflagefläche und mindestens eine Anlagefläche für den Schneidkörper aufweist und wobei eine weitere Ausnehmung die Auflagefläche teilweise durchbricht.

Des weiteren ist bevorzugt vorgesehen, dass das erste und zweite Führungsteil im Querschnitt vorzugsweise halbrund bzw. stegartig mit halbrund geformter vom Grundkörper entfernt liegenden Endfläche ausgebildet derart am Grundkörper des Halterungselementes angeformt sind, dass das erste Führungsteil in der Symmetrieebene des Grundkörpers und das zweite Führungsteil in einem Winkel geneigt nach rechts vorgesehen ist.

Eine unter Umständen bevorzugte Variante wird darin gesehen, dass das erste und zweite Führungsteil im Querschnitt wie voranstehend ausgebildet und in der Symmetrieebene des Grundkörpers des Halterungselementes angeordnet sind.

Eine bevorzugte Variante wird zudem darin gesehen, dass das erste und zweite Führungsteil im Querschnitt ebenfalls wie voranstehend ausgebildet derart am Grundkörper des Halterungselementes angeformt sind, dass das erste Führungsteil in der Symmetrieebene des Grundkörpers und das zweite Führungsteil in einem Winkel geneigt nach links vorgesehen ist.

Die Erfindung wird folgend anhand von in Zeichnungen schematisch dargestellten Ausführungsbeispielen im Detail näher beschrieben. Es zeigen:
- Fig. 1:: das Kopfteil eines Werkzeuges mit dem neuen Befestigungssystem für einen Schneidkörper in Draufsicht;
- Fig. 1a:: den in Fig. 1 gezeigten Teilbereich des Werkzeuges, der in der Zeichnungsebene nach rechts gedreht ist;
- Fig. 1b:: einen Teil der Fig. 1a, vergrößert, ohne Schneidkörper und Halterungselement;
- Fig. 2:: eine Stirnansicht des in Fig. 1 gezeigten Werkzeuges mit Teilschnitt A-A;
- Fig. 2a:: den in Fig. 2 gezeigten Teilbereich des Werkzeuges in der Zeichnungsebene nach rechts gedreht als Seitenansicht;
- Fig. 2b:: einen Teil der Fig. 2a, vergrößert, ohne Schneidkörper und Halterungselement;
- Fig. 3:: das Halterungselement in Frontalansicht;
- Fig. 3a:: eine erste Ausführungsform des Halterungselementes;
- Fig. 3b:: eine zweite Ausführungsform des Halterungselementes;
- Fig. 3c:: eine dritte Ausführungsform des Halterungselementes;
- Fig. 4:: das Halterungselement nach Fig. 3 in Seitenansicht;
- Fig. 5:: das Halterungselement nach Fig. 3 in Draufsicht;
**und**
- Fig. 6:: das Halterungselement nach Fig. 3 in Draufsicht mit enthaltenem Stellmittel.

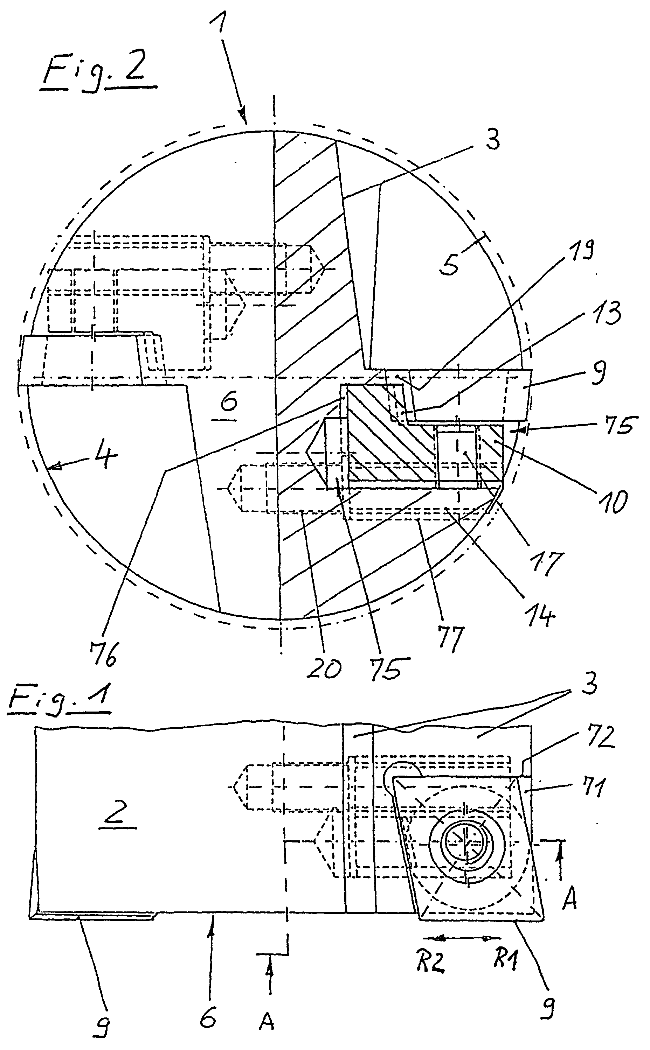

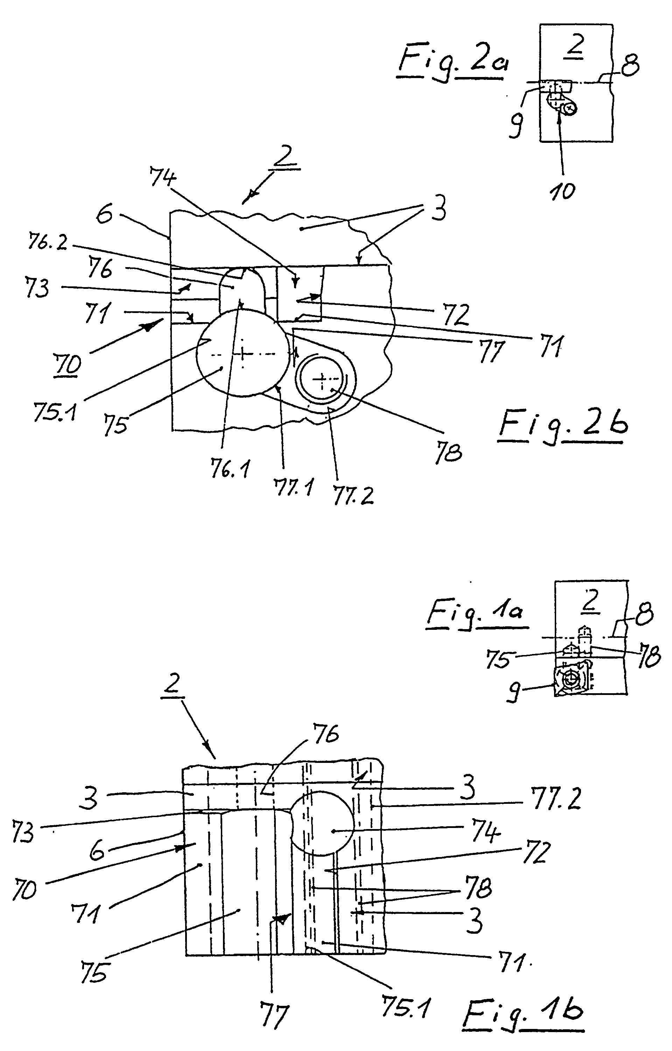

Die Figuren 1 und 2 zeigen ein Kopfteil 2 eines Werkzeuges 1, beispielsweise eines Bohrwerkzeuges mit dem neuen Befestigungssystem für einen Schneidkörper 9, insbesondere für eine Wechsel-Schneidplatte. Die Mittel zur verschieb- und arretierbaren Halterung von mindestens einem Schneidkörper 9, welcher in mindestens einem Teilbereich des Werkzeuges 1 mit einem Außendurchmesser 4 und einem Arbeitsdurchmesser 5 angeordnet ist, umfassen eine in einer Spanleitfläche 3 des Werkzeuges 1 angeordnete und zumindest die Umfangsfläche des Werkzeuges 1 durchbrechende erste Ausnehmung 70, ein verschiebbar in unterhalb dieser Ausnehmung 70 vorgesehenen weiteren Ausnehmungen 75, 76, 77 angeordnetes erfindungsgemäßes Halterungselement 10, das als kombiniertes Klemm- und Stellelement ausgebildet ist, ein den betreffenden, in der Ausnehmung 70 auswechselbar sitzenden Schneidkörper 9 im wesentlichen zentrisch durchsetzendes, mit dem Halterungselement 10 lösbar verbundenes, nicht näher dargestelltes Anzugselement, sowie ein in einer Führung 25 des Halterungselementes 10 angeordnetes und mit einem Teilbereich in einem im Werkzeug 1 angeordneten Lager 78 lösbar verbundenes Stellmittel 20.

Figur 1a zeigt einen Teilbereich des Kopfteiles 2 des Werkzeuges 1, der gegenüber der Fig. 1 nach rechts gedreht ist, mit dem Schneidkörper 9, der Ausnehmung 75, die als zylindrische Grundform ausgebildet ist, dem Lager 78, das durch eine Gewindebohrung oder beispielsweise eine Grundbohrung mit einem sekantartig liegendem Arretierstift realisiert ist.

Die Figuren 1b und 2b zeigen einen vergrößert dargestellten Teilbereich des Kopfteiles 2 des Werkzeuges 1, mit der in der Spanleitfläche 3 des Werkzeuges 1 angeordneten ersten Ausnehmung 70, die eine Auflagefläche 71 und mindestens eine Anlagefläche 72 für den nicht dargestellten Schneidkörper 9 aufweist und wobei weitere Ausnehmungen 75, 76, 77 zur Aufnahme des Halterungselementes 10 vorgesehen sind, derart, dass die erste Ausnehmung 70 eine Auflagefläche 71 und mindestens eine Anlagefläche 72 für den Schneidkörper 9 aufweist und wobei die Ausnehmungen 75, oder 75, 76 oder 75, 76, 77 die Auflagefläche 71 teilweise durchbrechen und die Ausnehmung 76, 77 einen Fußbereich 76.1, 77.1 und einen Kopfbereich 76.2, 77.2 aufweisen. Die Anlagefläche 72 in der Ausnehmung 70 endet körpereinwärts in einem Freistich 74, der senkrecht zur Auflagefläche 71 angeordnet selbige 71 im betreffenden Eckbereich durchbricht.

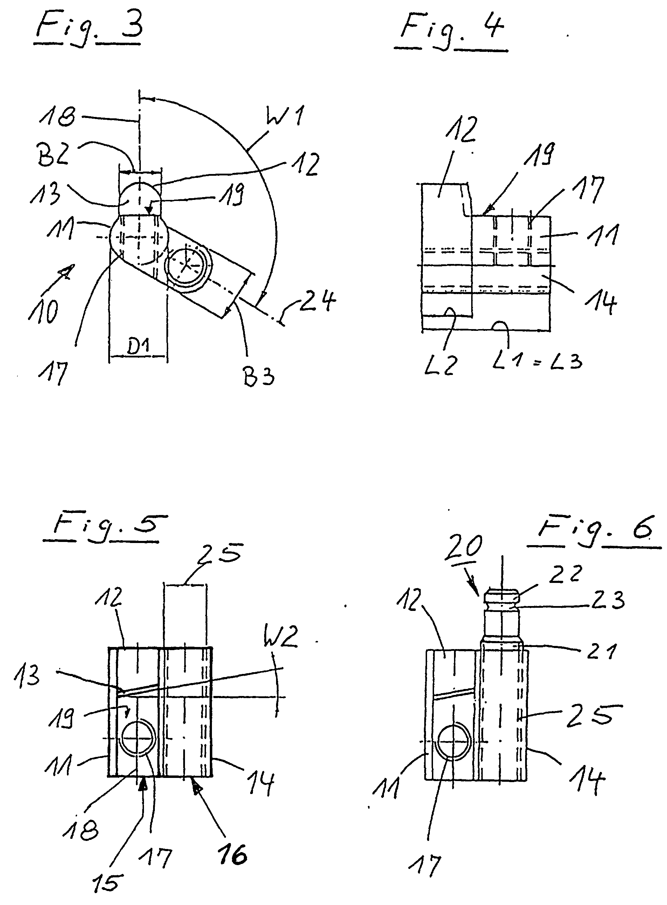

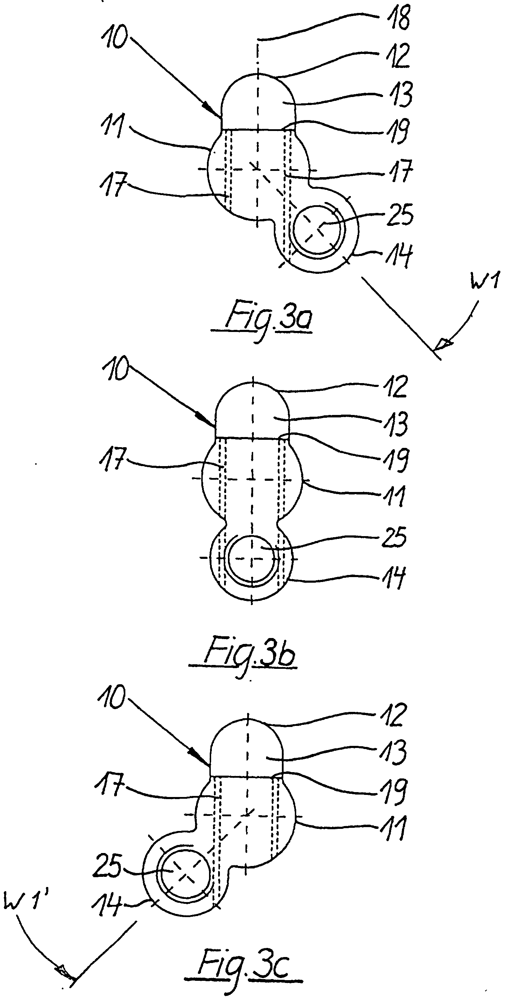

In den Figuren 3a, 3b, 3c sind Varianten des in der Figur 3 dargestellten neuen Halterungselementes 10 für den Schneidkörper 9 gezeigt. Das Halterungselement 10, das in den Figuren 3-6 in verschiedenen Ansichten dargestellt ist, besteht aus einem Grundkörper 11, von dem aus ein erstes Führungsteil 12 und ein zweites Führungsteil 14, die jeweils stegartig ausgebildet sind und im wesentlichen flügelartig abstehen, wobei das erste Führungsteil 12 eine stirnseitig gelegene Schulter 13 besitzt, die gegenüber der Stirnfläche 15 des Grundkörpers 11 nach hinten versetzt ist sowie eine von der Fußkante der Schulter 13 ausgehende, bis zur Stirnseite 15 des Grundkörpers 11 reichende Freifläche 19 vorgesehen ist, die von einer in der Symmetrieebene 18 des Grundkörpers 11 liegende Gewindebohrung 17 durchsetzt ist und wobei im zweiten Führungsteil 14 eine von dessen Stirnfläche 16 ausgehende, durchgehende Gewindebohrung 25 angeordnet ist. Die Symmetrieebene des zweiten Führungsteiles 14 ist mit 24 bezeichnet.

Figur 3a zeigt eine Ausführungsform des Halterungselementes 10, bei dem das erste und zweite Führungsteil 12, 14 im Querschnitt halbrund ausgebildet derart am zylindrische Grundkörper 11 des Halterungselementes 10 angeformt sind, dass das erste Führungsteil 12 in der Symmetrieebene 18 des Grundkörpers 11 und das zweite Führungsteil 14 mit seiner Symmetrieebene 24 unter einem Winkel W1 geneigt nach rechts vorgesehen ist.

Figur 3b zeigt eine weitere unter Umständen bevorzugte Variante des Halterungselementes 10, bei der das erste und zweite Führungsteil 12, 14 im Querschnitt halbrund ausgebildet und in der Symmetrieebene 18 des zylindrischen Grundkörpers 11 des Halterungselementes 10 angeordnet sind. Die Symetrieebene 24 fällt hier in die Symetrieebene 18 des Grundkörpers 11.

Figur 3c zeigt ebenfalls eine Variante des Halterungselementes 10, bei der das erste und zweite Führungsteil 12, 14 halbrund ausgebildet derart am Grundkörper 11 des Halterungselementes 10 angeformt sind, dass das erste Führungsteil 12 in der Symmetrieebene 18 des Grundkörpers 11 und das zweite Führungsteil 14 mit seiner Symmetrieebene 24 unter einem Winkel W1' geneigt nach links vorgesehen ist.

Die Figur 6 zeigt das Halterungselement 10 mit einem Stellmittel 20 in Form eines Gewindestiftes, der in eine Gewindedurchgangsbohrung 25 eingeschraubt ist, wobei der Gewindestift 20 in seinem vorderen Abschnitt 21 vorzugsweise einen Zapfen 22 mit einem Einstich 23 aufweist. In diesen Einstich 23 greift der sekantartig im Lager 78 angeordnete nicht weiter dargestellte Arretierstift ein.

Wie in den Figuren 3, 4 bzw. 5 dargestellt ist, weist der Grundkörper 11 des Halterungselementes 10 einen Durchmesser D1 auf, der vorzugsweise größer ist als die Breite B2 bzw. B3 des ersten bzw. des zweiten Führungsteiles 12 bzw. 14. Die Länge L1 des Grundkörpers 11 ist vorzugsweise gleich der Länge L3 des zweiten Führungsteiles 14. Gemäß der Figur 4 beträgt die Länge L2 des ersten Führungsteiles 12 etwa ein Drittel der Länge L1 bzw. L3.
Eine weitere mögliche Detailgestaltung ist in Figur 5 ersichtlich. Die Schulter 13 am ersten Führungsteil 12 ist unter einem Winkel W2 nach innen gerichtet schräg zur Stirnfläche 15 des Grundkörpers 11 angeordnet.

Folgend wird kurz die Wirkungsweise des neuen Befestigungssystems erläutert. Durch Betätigung des Stellmittels 20, welches vorzugsweise ein Gewindestift ist, der einseitig mit seinem Zapfen 22 samt Einstich 23 im Lager 78 drehbar befestigt ist, wird das Halterungselement 10, das mit seinen Körperteilen Grundkörper 11, erstes Führungsteil 12 und zweites Führungsteil 14 in den Ausnehmungen 75, 76 bzw. 77 gleitend bewegbar ist, in Bewegungsrichtung R1 bzw. R2 radial verstellt. Nach Erreichen der vorgesehenen Position wird der Schneidkörper 9 mit einem nicht weiter bezeichneten Anzugselement, vorzugsweise einer Schraube, die in die Gewindebohrung 17 des Halterungselementes 10 eingreift, auf der Auflagefläche 71 der Ausnehmung 70 arretiert, wobei der Grundkörper 11 des Halterungselementes 10 als Wiederlager gegen die Wandung 75.1 der erweiterten Ausnehmung 75 gezogen wird und somit den in radialer Richtung positionierten Schneidkörper 9 auf der Auflagefläche 71 der Ausnehmung 70 lösbar festlegt und wobei gleichzeitig der Schneidkörper 9 an die Anlagefläche 72 der Ausnehmung 70 axial ausgerichtet angelegt wird.

Der wesentliche Vorteil des neuen Befestigungssystems besteht vor allem durch Reduzierung der Anzahl der notwendigen Einzelteile darin, dass im Kopfteil 2 des Werkzeugs 1 weniger Führungen/Bohrungen eingearbeitet werden müssen und zudem noch darin, dass das Stellelement und das Befestigungselement für den Schneidkörper quasi von einer Seite aus betätigbar ist. Ein weiterer Vorteil wird noch darin gesehen, dass die Qualität der Führung des Halterungselementes während des Einstellens der vorgesehenen Position des Schneidkörpers wesentlich feinfühliger als bei den bisher bekannten Lösungen erfolgen kann. Dies wird vor allem dadurch erreicht, dass das Stellmittel und das Halterungselement des Befestigungssystems in einem gemeinsamen Körper vereint sind. Die gewählte und offenbarte Anordnung der Körperteile des Halterungselementes 10, des Grundkörpers 11, des ersten Führungsteiles 12 sowie des zweiten Führungsteiles 14 zueinander bewirken gute Führungseigenschaften des Halterungselementes 10 in den Ausnehmungen 75, 76, 77 und erlauben, insbesondere auch durch die Ausführungsvarianten der Körpergestaltung gemäß den Figuren 3a bis 3c, dessen Verwendung bei kleinen als auch relativ großen Schneidkörpern; dass heißt, dass dieses Befestigungssystem, von seiner Art her, an verschieden groß dimensionierten Werkzeugen Anwendung finden kann.

Die in den Figuren 3a bis 3c gezeigte Einschnürung im Bereich des Überganges des Grundkörpers 11 zum zweiten Führungsteil 14 hin erhöhen die Gleit-/Führungsfläche der Körperteile des Halterungselementes 10 in den Ausnehmungen 75 und 77, was positiv auf die mit diesem Befestigungssystem erreichbaren Einstellgenauigkeit wirkt.

Die Erfindung ist nicht auf das Ausführungsbeispiel beschränkt, sondern im Rahmen der Offenbarung vielfach variabel.
So kann z.B. das Stellmittel 20 ein Gewindestift sein, dessen vorderer Abschnitt 21 ebenfalls ein Gewindestück ist bzw. einen Bereich mit Gewinde aufweist, wobei ein Längsbereich des Stellmittels 20 ein Links- und der andere, benachbarte Längsbereich ein Rechtsgewinde besitzt. Das Lager 78, in dem zumindest ein Teilbereich des vorderen Abschnittes 21 geführt wird, ist mit einer korrespondierenden Gewindebohrung ausgestattet.

### Bezugsziffernverzeichnis

- 1: Werkzeug (Bohrwerkzeug)
- 2: Kopfteil
- 3: Spanleitfläche
- 4: Außendurchmesser
- 5: Arbeitsdurchmesser
- 6: Stirnfläche
- 70: Ausnehmung
- 71: Auflagefläche
- 72: Anlagefläche
- 73: Ausnehmungswand
- 74: Freistich
- 75: erweiterte Ausnehmung (zylindrische Grundform)
- 75.1: Wandung
- 76: zusätzliche Ausnehmung
- 76.1: Fußbereich
- 76.2: Kopfbereich
- 77: weitere Ausnehmung
- 77.1: Fußbereich
- 77.2: Kopfbereich
- 78: Lager (Gewindebohrung oder z.B. Grundbohrung mit sekantenartig liegendem Arretierstift)
- 8: Zentrumsachse von Pos. 1
- 9: Schneidkörper
- 10: Halterungselement
- 11: Grundkörper
- 12: erstes Führungsteil
- 13: Schulter (vordere Fläche -Stirnfläche- des ersten Führungsteiles, Pos. 12)
- 14: zweites Führungsteil
- 15: Stirnfläche Grundkörper
- 16: Stirnfläche zweites Führungsteil
- 17: Gewindebohrung
- 18: Symmetrieebene von 11
- 19: Freifläche
- 20: Stellmittel (Gewindestift)
- 21: vorderer Abschnitt von Pos. 20
- 22: Zapfen (hinterer Abschnitt)
- 23: Einstich
- 24: Symmetrieebene von 14
- 25: Führung (Gewindedurchgangsbohrung)
- B2: Breite erstes Führungsteil
- B3: Breite zweites Führungsteil
- D1: Durchmesser Grundkörper
- L1: Länge Grundkörper
- L2: Länge erstes Führungsteil
- L3: Länge zweites Führungsteil
- R1, R2: Bewegungsrichtung
- W1, W1',W2: Winkel

## Patentansprüche

1. Befestigungssystem für einen Schneidkörper, insbesondere für eine Wechsel-Schneidplatte, an einem, mindestens einen Schneidkörper (9) aufnehmenden, zur spanabhebenden Formgebung einsetzbaren Werkzeug (1), mit Mitteln zur verschieb- und arretierbaren Halterung von mindestens einem Schneidkörper (9), welcher in mindestens einem Teilbereich des Werkzeuges (1) angeordnet und mittels einem Anzugselement festsetzbar ist, welches lösbar mit einem im Werkzeug (1) bewegbar gelagerten Halterungselement (10) verbunden ist und den betreffenden, in einer Ausnehmung (70) auswechselbar angeordneten Schneidkörper (9) im Wesentlichen zentrisch durchsetzt, wobei die Mittel zur verschieb- und arretierbaren Halterung eines Schneidkörpers (9) ein in und im Wesentlichen unterhalb einer Spanleitfläche (3) des Werkzeuges (1) in mehreren, teils ineinander übergehenden weiteren Ausnehmungen (75, 76, 77) angeordnetes Halterungselement (10) und ein Anzugselement umfassen, **dadurch gekennzeichnet, dass** besagte Mittel weiterhin ein in einer Führung (25) des Halterungselementes (10) angeordnetes und mit einem Teilbereich in einem im Werkzeug (1) korrespondierend angeordneten Lager (78) lösbar verbundenes Stellmittel (20) umfassen.

2. Befestigungssystem für einen Schneidkörper nach Anspruch 1,
**dadurch gekennzeichnet, dass**
das Halterungselement (10) einen Grundkörper (11) aufweist, von dem jeweils ein stegartig ausgebildetes erstes Führungsteil (12) und zweites Führungsteil (14) im wesentlichen flügelartig abstehen.

3. Befestigungssystem für einen Schneidkörper nach Anspruch 1 oder 2,
**dadurch gekennzeichnet, dass**
die Ausnehmung (70) eine Auflagefläche (71) und mindestens eine Anlagefläche (72) für den Schneidkörper (9) aufweist und wobei zumindest die weitere Ausnehmung (75) die Auflagefläche (71) teilweise durchbricht.

4. Befestigungssystem für einen Schneidkörper nach Anspruch 2,
**dadurch gekennzeichnet, dass**
das erste und zweite Führungsteil (12,14) im Querschnitt halbrund ausgebildet derart am Grundkörper (11) angeformt sind, dass das erste Führungsteil (12) in der Symmetrieebene (18) des Grundkörpers (11) und das zweite Führungsteil (14) unter einem Winkel (W1) geneigt nach rechts vorgesehen ist.

5. Befestigungssystem für einen Schneidkörper nach Anspruch 2,
**dadurch gekennzeichnet, dass**
das erste und zweite Führungsteil (12,14) im Querschnitt halbrund ausgebildet und in der Symmetrieebene (18) des Grundkörpers (11) angeordnet sind.

6. Befestigungssystem für einen Schneidkörper nach Anspruch 2,
**dadurch gekennzeichnet, dass**
das erste und zweite Führungsteil (12,14) im Querschnitt halbrund ausgebildet derart am Grundkörper (11) angeformt sind, dass das erste Führungsteil (12) in der Symmetrieebene (18) des Grundkörpers (11) und das zweite Führungsteil (14) unter einem Winkel (W1') geneigt nach links vorgesehen ist.

7. Befestigungssystem für einen Schneidkörper nach Anspruch 2, 4, 5 oder 6,
**dadurch gekennzeichnet, dass**
das erste Führungsteil (12) eine stirnseitig gelegene Schulter (13) besitzt, die gegenüber der Stirnfläche (15) des Grundkörpers (11) nach hinten versetzt ist, und eine von der Fußkante der Schulter (13) ausgehende, bis zur Stirnseite (15) des Grundkörpers (11) reichende Freifläche (19) vorgesehen ist, die von einer in der Symmetrieebene (18) des Grundkörpers (11) liegenden Gewindebohrung (17) durchsetzt ist.

8. Befestigungssystem nach Anspruch 2, 4, 5, 6 oder 7,
**dadurch gekennzeichnet, dass**
die im zweiten Führungsteil (14) von dessen Stirnfläche (16) ausgehende durchgehende Führung (25) eine Gewindebohrung ist.

## Claims

1. Fastening system for a cutting body, particularly for an exchangeable cutting plate, at a tool (1) which receives at least one cutting body (9) and is usable for shaping by metal cutting, with means for displaceable and lockable retention of at least one cutting body (9), which is arranged in at least one part region of the tool (1) and fixable by means of a tightening element, which is detachably connected with a holding element (10) movably mounted in the tool (1) and passes substantially centrally through the respective cutting body (9) exchangeably arranged in a recess (70), wherein the means for displaceable and lockable retention of a cutting body (9) comprise a holding element (10), which is arranged in and substantially below a chip guide surface (3) of the tool (1) in several further recesses (75, 76, 77) partly going over into one another, and a tightening element, **characterised in that** the said means further comprise a setting means (20) arranged in a guide (25) of the holding element (10) and detachably connected with a part region in a bearing (78) correspondingly arranged in the tool (1).

2. Fastening system for a cutting body according to claim 1, **characterised in that** the holding element (10) comprises a base body (11), from which a first guide part (12) and second guide part (14) of web-like construction each project in substantially blade-like manner.

3. Fastening system for a cutting body according to claim 1 or 2, **characterised in that** the recess (70) has a support surface (71) and at least one contact surface (72) for the cutting body (9) and wherein at least the further recess (75) partly penetrates the support surface (71).

4. Fastening system for a cutting body according to claim **2, characterised in that** the first and second guide part (12, 14) are constructed to be semicircular in cross-section and integrally formed at the base body (11) in such a manner that the first guide part (12) is provided in the plane (18) of symmetry of the base body (11) and the second guide part (14) is provided to be inclined to the right at an angle (W1).

5. Fastening system for a cutting body according to claim 2, **characterised in that** the first and second guide part (12, 14) are constructed to be semicircular in cross-section and are arranged in the plane (18) of symmetry of the base body (11).

6. Fastening system for a cutting body according to claim 2, **characterised in that** the first and second guide part (12, 14) are constructed to be semicircular in cross-section and integrally formed at the base body (11) in such a manner that the first guide part (12) is provided in the plane (18) of symmetry of the base body (11) and the second guide part (14) Is provided to be Inclined to the left at an angle (W1').

7. Fastening system for a cutting body according to claim 2, 4, 5 or 6, **characterised in that** the first guide part (12) has a shoulder (13) which is disposed at the end and which is offset rearwardly relative to the end surface (15) of the base body (11), and a free surface (19), which is penetrated by a threaded bore (17) lying in the plane (18) of symmetry of the base body (11), is provided to go out from the foot edge of the shoulder (13) and extend up to the end (15) of the base body (11).

8. Fastening system according to claim 2, 4, 5, 6 or 7, **characterised in that** the guide (25) continuing on in the second guide part (14) from the end surface (16) thereof is a threaded bore.

## Revendications

1. Système de montage pour un élément de coupe, en particulier pour une plaque de coupe interchangeable sur un outil (1) accueillant au moins un élément de coupe (9) et utilisable pour l'usinage par enlèvement de copeaux, avec des dispositifs pour attacher au moins un élément de coupe (9) de manière à pouvoir le déplacer et le fixer, cet élément de coupe étant disposé dans au moins une zone partielle de l'outil (1) et pouvant être fixé au moyen d'un élément de serrage qui est relié de manière amovible à un élément d'attache (10) logé de manière mobile dans l'outil (1) et traverse de manière essentiellement centrée l'élément de coupe (9) concerné disposé dans un évidement (70) de manière interchangeable, les dispositifs d'attache permettant le déplacement et la fixation d'un élément de coupe (9) comprenant un élément d'attache (10) disposé dans et pour l'essentiel en dessous d'une surface de guidage d'enlèvement de copeaux (3) de l'outil (1) dans plusieurs autres évidements (75, 76, 77) qui entrent en partie les uns dans les autres et un élément de serrage,
**caractérisé en ce que** les dits dispositifs comprennent également un dispositif de réglage (20) disposé dans une coulisse (25) de l'élément d'attache (10) et relié de manière amovible à une zone partielle dans un palier (78) disposé de manière correspondante dans l'outil (1).

2. Système de montage pour un élément de coupe selon la revendication 1,
**caractérisé en ce que**
l'élément d'attache (10) comporte un élément de base (11) dont dépassent respectivement un premier élément de guidage (12) configuré sous forme de bord et un deuxième élément de guidage (14) essentiellement en forme d'aile.

3. Système de montage pour un élément de coupe selon la revendication 1 ou 2,
**caractérisé en ce que**
l'évidement (70) comporte une surface d'appui (71) et au moins une surface de contact (72) pour l'élément de coupe (9), au moins l'autre évidement (75) traversant en partie la surface d'appui (71).

4. Système de montage pour un élément de coupe selon la revendication 2,
**caractérisé en ce que**
les premier et deuxième éléments de guidage (12, 14) dans la section transversale sont configurés de manière semi-circulaire et formés sur l'élément de base (11) de telle sorte que le premier élément de guidage (12) soit prévu dans le plan symétrique (18) de l'élément de base (11) et le deuxième élément de guidage (14) incliné vers la droite sous un angle (W1).

5. Système de montage pour un élément de coupe selon la revendication 2,
**caractérisé en ce que**
les premier et deuxième éléments de guidage (12, 14) dans la section transversale sont configurés de manière semi-circulaire et disposés dans le plan symétrique (18) de l'élément de base (11).

6. Système de montage pour un élément de coupe selon la revendication 2,
**caractérisé en ce que**
les premier et deuxième éléments de guidage (12, 14) dans la section transversale sont configurés de manière semi-circulaire et formés sur l'élément de base (11) de telle sorte que le premier élément de guidage (12) soit prévu dans le plan symétrique (18) de l'élément de base (11) et le deuxième élément de guidage (14) incliné vers la gauche sous un angle (W1').

7. Système de montage pour un élément de coupe selon la revendication 2, 4, 5 ou 6,
**caractérisé en ce que**
le premier élément de guidage (12) possède une épaule (13) située sur la face frontale qui est décalée vers l'arrière par rapport à la face frontale (15) de l'élément de base (11), et **en ce qu'**une surface libre (19) qui va du bord du pied de l'épaule (13) à la face frontale (15) de l'élément de base (11) et est traversée par un alésage fileté (17) situé dans le plan symétrique (18) de l'élément de base (11) est prévue.

8. Système de montage selon la revendication 2, 4, 5, 6, ou 7,
**caractérisé en ce que**
la coulisse (25) qui part de la face frontale (16) du deuxième élément de guidage (14) est un alésage fileté.
